# EUROPEAN PATENT SPECIFICATION

(11) **EP 1 788 298 B1**
(45) Date of publication and mention of the grant of the patent: **31.12.2008**
(21) Application number: 06124531.2
(22) Date of filing: 22.11.2006
(51) Int. Cl.: F16L 57/00

(54) **Protective assembly for the threaded end of a pipe and its interior comprising an open threaded protector and a blank cover that can be embedded in it**
Schutzanordnung für das Rohrgewindeende und seine Innenseite mit einem offenen Gewindeschutz und einer Abdeckung, die darin eingebettet sein kann
Ensemble de protection pour l'extrémité filetée d'une conduite et son intérieur comprenant un élément de protection fileté ouvert et un couvercle pouvant être intégré dans celui-ci

(30) Priority: 22.11.2005 AR P050104885
(43) Date of publication of application: 23.05.2007
(73) Proprietor: Siderca S.A.I.C., Piso 27 (C1001AFA) Buenos Aires (AR)
(72) Inventor: Pagura, Carlos Leopoldo, (C1001AFA) Capital Federal Buenos Aires (AR); Dapino, Guillermo Oscar, (C1001AFA) Capital Federal Buenos Aires (AR); Pajaro Gonzalez, Manuel, (C1001AFA) Capital Federal Buenos Aires (AR)
(74) Representative: Cinquantini, Bruno

(56) References cited:
- EP-A2- 0 297 493
- US-A- 4 020 873
- US-A- 4 185 665

## Description

### Field of the invention

The present invention relates to a protective assembly for the threaded end of a pipe and its interior. More particularly, it relates to an assembly that comprises an open protector and a sealing cover that can be embedded in the latter making it possible to protect the thread of a pipe during the different stages of the manufacturing process, such as for example the passage of the mandrel, internal visual inspection, hydraulic testing and lacquering; as well as during its subsequent handling and transport.

### Prior Art

Documents US 6196270 and US 6367508 disclose threaded protectors for protecting the threaded end of a pipe that comprise a base portion from which on one side and in an axial manner a threaded box projects having a thread that screws onto the threaded end of a pipe, and on another side an annular cap that also projects in an axial manner from the base portion in the opposite direction to the box. The protectors are made on the basis of a non-metallic raw material, such as high-density polyethylene. The annular cap has an internal beveling in such a way that the internal portion is conical, and may also include an external beveling that extends from its middle part.

In general, current protectors are either of the type with an open end so that maneuvering and analysis techniques can be employed during the pipes' manufacture; or of the closed type such as the ones cited above, which are used to replace the open maneuvering protectors so that the pipes can be dispatched in line with customers' requests. The use of a maneuvering open protector and another closed one for dispatch implies greater use of raw material for the same purpose, and a longer pipe manufacturing process because it requires changing the open maneuvering protector, needed for the hydraulic test and passage of the mandrel, to install a closed-type protector for dispatch.

Document EP0297493 (corresponding to the preamble of claim 1) discloses a protective device for pipe ends having a metal housing with a sleeve-shaped insert of elastomer material, or a metal plug with a sleeve-shaped coating of elastomer material. A metal housing has a bordered or folded rim at the outer end, which is designed as a rolled edge. The Insert or coating consists of two partially cylindrical jacket parts joined together.

Document US4020873 discloses a thread protector for the external threads of a pipe comprising two parts, an outer sleeve and an inner casing having spaced arcuate sections. The arcuate sections have threads thereon conforming to the pipe threads, a flange at their outer end having raised bosses around its inner periphery, and a shoulder around its other end. The outer sleeve is axially matable with the casing, having a lip at its outer end and a channel about its other end. The two parts are axially secured to the threaded pipe and locked thereon by interaction of the casing and sleeve so that the unit is removable from the threaded pipe only by unscrewing the same as a unit.

### Summary of the invention

The objective of the present invention is to resolve the problems set out above through a protective assembly that combines both structures, in other words that of an open-type protector with a closed-type one. This is achieved by using an open-type threaded protector, whereon a blank cover is fitted. The ease with which the cover is fitted optimizes manufacturing times and at the same time fulfils the requirements of the assembly having a reduced thickness minimizing the use of raw material for the same purpose. In addition, it implies less generation of dangerous waste due to the grease contained in the open maneuvering protectors.

The open protector has optimized dimensions for maximum productivity of the plant and the cover adds resistance to front and side impacts. The protective assembly is moreover totally recyclable, made of polyethylene. It can either be re-used if it is in good condition, or the plastic can be recycled to make a new protector. It can be used for any type of thread or pipe depending on the customers' requirements.

Fitting of the blank cover on the open threaded protector must comply with the specifications requested by customers, and at the same time with ISO standard 11960 Annex I: "Thread Protector Design Validation Requirements".

Thus, the object of the present invention is a protective assembly for the threaded end of a pipe and its interior, according to claim 1.

### Brief description of the drawings

Below we provide a brief description of the drawings.
Figure 1 is an elevation section view of the protective assembly of the invention.
Figure 2 is a side section view of the assembled protective assembly of the invention; and
Figure 3 is an axonometric exterior view of the assembled protective assembly of the invention.

### Detailed description of the invention

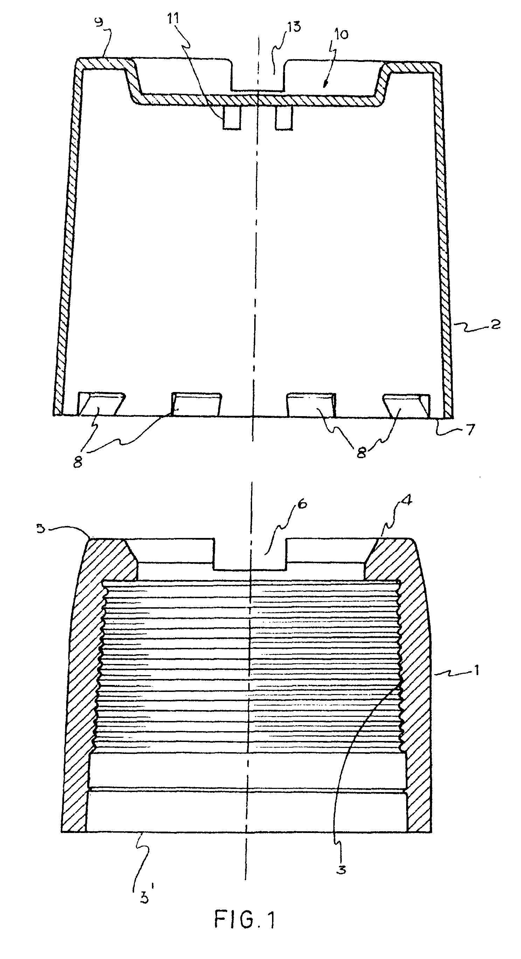

Figure 1 illustrates an elevation section view of the invention's protective assembly. This assembly consists of an open threaded protector 1 and a blank cover 2. Said open threaded protector 1 comprises an internal thread 3 that screws onto the threaded end of a pipe (not shown), and a protector bumper 5 on the external periphery of its upper end 4, whereon a plurality of keyways are made for torque of the protector 6.

For its part, the blank cover 2 comprises on the internal periphery of its lower end 7 a plurality of mechanical tabs 8, preferably equally spaced, which become axially embedded in the lower end 3' of the open threaded protector 1. At the same time, the blank cover 2 has a cover bumper 9 on the external periphery of its top end 10. Said cover bumper 9 has a plurality of keyways for cover torque 13, from which internally a plurality of internal ribs project 11 which slot into the plurality of keyways for torque of the protector 6. Both the open threaded protector (1) and the blank cover (2) are manufactured from a non-metallic material, such as for example polyethylene, polypropylene, or polyamides.

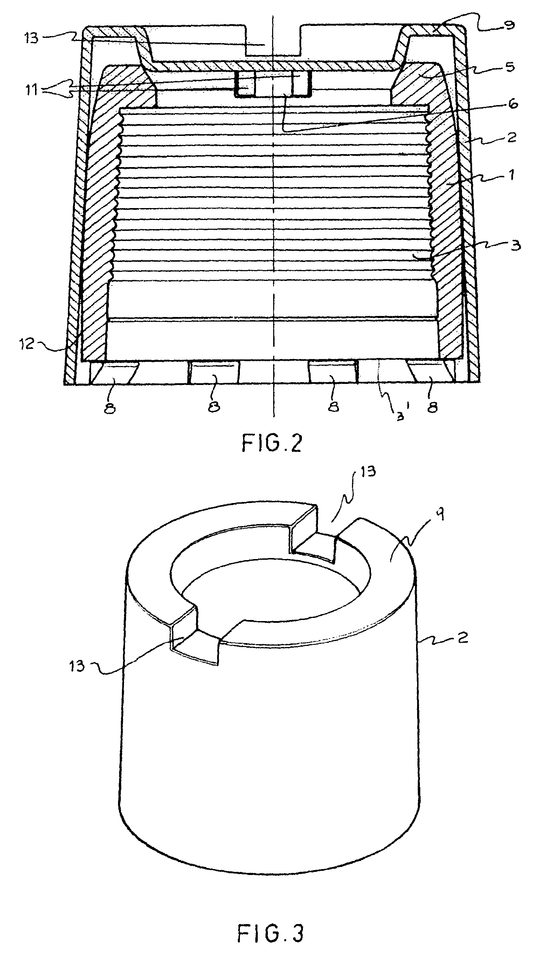

Figure 2 illustrates a side section view of the invention's protective assembly already assembled. Here it is possible to see how the blank cover 2 becomes embedded by the internal ribs 11 in the keyways for torque of the protector 6. In this way and from the keyways for cover torque 13 the assembly of threaded protector-cover can be removed or fitted. It is also possible to see how the blank cover 2 is axially embedded in the open protector 1, through the action of the plurality of mechanical tabs 8.

The fitting of the threaded protector-cover assembly requires a single accurate blow using a solid instrument such as a wooden bat or protected hammer. This blow makes it possible to initially set the blank cover 2 on the threaded protector 1, since from there it displaces relatively easily. This is so because the only thing making friction on the open protector 1 is the plurality of mechanical tabs 8 of the blank cover 2. In principle, it is not necessary for the open protector 1 and the blank cover 2 to be aligned to start fitting. This is so because a gap 12 is created between the internal diameter of the blank cover 2 and external diameter of the open protector 1. During fitting of the assembly, it is relatively easy to rotate the lid 2 and push it slightly forward for it to readjust and slot onto the keyway for torque of the protector 6. In the event of the assembly not being aligned, a slight action of rotation and force forward will make the assembly fit together normally. Once the assembly is fitted on the threaded end of a pipe its extraction is very difficult. In addition, since the pipes are in contact with each other during manipulation, and due to the gap 12, there is a risk of radial displacement of the blank cover 2 in relation to the open protector 1, meaning that mechanical tabs 8 may be out of contact with the open protector 1. Although this radial displacement may occur, this will not cause the blank cover 2 to come off, because consequentially at 180° of this radial displacement there is greater contact.

Figure 3 illustrates an external perspective view of the protective assembly of open threaded protector-cover already assembled, in which in the foreground can be observed the cover bumper 9 and keyways for cover torque 13, under which the internal ribs 11 project that prevent the blank cover's 2 rotation in relation to the open threaded protector 1, as they slot into the keyways for torque of the protector 6.

In general, the thickness of the assembly is determined by previous art, although for the assembly of the invention a lateral wall is preferred for the blank cover 2 with a minimum thickness of 2 mm to resists a side impact, and of the cover bumper 9 of at least 8 mm to resist a front impact.

## Claims

1. A protective assembly for a threaded end of a pipe and the interior thereof, comprising:
an open threaded protector (1) having:
an internal thread (3), and
a protector bumper (5) formed on the external periphery of its upper end (4), whereon keyways (6) are formed for a torque coupling of the protector (1); and
a blank cover member(2) having:
a plurality of mechanical tabs (8) formed on the internal periphery of the lower end (7) thereof, and for cooperating axially embedded with the lower end (3') of said threaded protector (1); and
a cover bumper (9) formed at the external periphery of the upper end (10) thereof, and a plurality of ribs (11) internally projecting and for cooperating embedded with said torque keyways of the protector (6),
the arrangement being such that after coupling said blank cover member (2) onto said open threaded protector (1) the blank cover (2) becomes embedded by the ribs (11) and mutual rotation is prevented,
**characterized in that** said bumper (9) is closed and has torque keyways (13), **in that** said blank cover (2) is made of a non-metallic material chosen in the following group:
- polyethylene;
- polypropylene;
- polyamides,
and between the internal diameter of the blank cover (2) and the external diameter of the open protector (1) a gap is generated (12) during fitting of the assembly, the arrangement being such that a radial displacement between the open protector (1) and the blank cover (2) is allowed.

2. The assembly according to claim 1, wherein said plurality of mechanical tabs (8) are equally spaced one from the other.

3. The assembly according to claim 1, wherein the side wall of the blank cover (2) has a thickness of at least 2 mm, and in that the cover bumper (9) has a thickness of at least 8 mm.

4. The assembly according to claim 1, wherein said internal thread (3) is designed to couple with a thread of the end of a pipe.

## Patentansprüche

1. Schutzanordnung für ein Gewindeende eines Rohres und dessen Inneres, umfassend:
eine offene Gewindeschutzvorrichtung (1), mit:
einem Innengewinde (3), und
einem Schutzvorrichtungsstoßfänger (5), der an dem Außenumfang ihres oberen Endes (4) gebildet ist,
woran Aussparungen (6) für eine Drehmomentkopplung der Schutzvorrichtung (1) gebildet sind; und
ein Rohrabdeckungselement (2), mit:
einer Vielzahl von mechanischen Nasen (8), die an dem Innenumfang seines unteren Endes (7) gebildet sind und zum Zusammenwirken axial mit dem unterem Ende (3') der Gewindeschutzvorrichtung (1) eingebettet sind; und
einem Abdeckungsstoßfänger (9), der an dem Außenumfang seines oberen Endes (10) gebildet ist,
und einer Vielzahl von Rippen (11), die innen vorstehen und zum Zusammenwirken mit den Drehmomentaussparungen der Schutzvorrichtung (6) eingebettet sind,
wobei die Anordnung derart ist, dass nach dem Koppeln des Rohrabdeckungselements (2) auf die offene Gewindeschutzvorrichtung (1) die Rohrabdeckung (2) durch die Rippen (11) eingebettet wird und eine wechselseitige Rotation verhindert wird,
**dadurch gekennzeichnet, dass**
der Stoßfänger (9) geschlossen ist und Drehmomentaussparungen (13) aufweist,
dass die Rohrabdeckung (2) aus einem nichtmetallischen Material hergestellt ist, das aus der folgenden Gruppe ausgewählt ist:
- Polyethylen;
- Polypropylen;
- Polyamide,
und zwischen dem Innendurchmesser der Rohrabdeckung (2) und dem Außendurchmesser der offenen Schutzvorrichtung (1) während der Montage der Anordnung ein Spalt (12) erzeugt wird, wobei die Anordnung derart ist, dass eine radiale Verschiebung zwischen der offenen Schutzvorrichtung (1) und der Rohrabdeckung (2) zugelassen wird.

2. Anordnung nach Anspruch 1,
wobei die Vielzahl von mechanischen Nasen (8) gleich voneinander beabstandet ist.

3. Anordnung nach Anspruch 1,
wobei die Seitenwand der Rohrabdeckung (2) eine Dicke von zumindest von 2 mm aufweist, und der Abdeckungsstoßfänger (9) eine Dicke von zumindest 8 mm aufweist.

4. Anordnung nach Anspruch 1,
wobei das Innengewinde (3) derart konstruiert ist, dass es mit einem Gewinde des Endes eines Rohrs gekoppelt ist.

## Revendications

1. Ensemble de protection pour une extrémité filetée d'un tuyau et son intérieur, comprenant :
un dispositif de protection fileté ouvert (1) ayant :
un filetage interne (3), et
un pare-chocs de dispositif de protection (5) formé sur la périphérie externe de son extrémité supérieure (4), sur laquelle des chemins de clavette (6) sont formés pour un couplage par couple de serrage du dispositif de protection (1) ; et
un élément de couvercle d'ébauche (2) ayant :
une pluralité de languettes mécaniques (8) formées sur la périphérie interne de son extrémité inférieure (7) et pour coopérer de manière axialement intégrée avec l'extrémité inférieure (3') dudit dispositif de protection fileté (1) ; et
un pare-chocs de couvercle (9) formé au niveau de la périphérie externe de son extrémité supérieure (10), et une pluralité de nervures (11) faisant saillie intérieurement et pour coopérer de manière intégrée avec lesdits chemins de clavette à couple de serrage du dispositif de protection (6),
l'agencement étant tel qu'après le couplage dudit élément de couvercle d'ébauche (2) sur ledit dispositif de protection fileté ouvert (1), le couvercle d'ébauche (2) est intégré par les nervures (11) et la rotation mutuelle est empêchée,
**caractérisé en ce que** ledit pare-chocs (9) est fermé et a des chemins de clavette à couple de serrage (13), **en ce que** ledit couvercle d'ébauche (2) est réalisé avec un matériau non métallique choisi dans le groupe suivant :
- le polyéthylène ;
- le polypropylène ;
- les polyamides,
et entre le diamètre interne du couvercle d'ébauche (2) et le diamètre externe du dispositif de protection (1), un espace est généré (12) pendant l'ajustement de l'ensemble, l'agencement étant tel qu'un déplacement radial entre le dispositif de protection ouvert (1) et le couvercle d'ébauche (2) est autorisé.

2. Ensemble selon la revendication 1, dans lequel lesdites plusieurs languettes mécaniques (8) sont espacées à égale distance les unes des autres.

3. Ensemble selon la revendication 1, dans lequel la paroi latérale du couvercle d'ébauche (2) a une épaisseur d'au moins 2 mm et le pare-chocs de couvercle (9) a une épaisseur d'au moins 8 mm.

4. Ensemble selon la revendication 1, dans lequel ledit filetage interne (3) est conçu pour se coupler avec un filetage de l'extrémité d'un tuyau.
